# EUROPÄISCHE PATENTSCHRIFT

(11) **EP 4 193 180 B1**
(45) Veröffentlichungstag und Bekanntmachung des Hinweises auf die Patenterteilung: **28.01.2026**
(21) Anmeldenummer: 21746446.0
(22) Anmeldetag: 19.07.2021
(51) Int. Cl.: G01S 7/4863, G01S 7/487, G01S 7/493, G01S 17/42, G01S 17/89

(54) **VERFAHREN ZUM ERMITTELN EINES OPTISCHEN ÜBERSPRECHENS EINES LIDAR-SENSORS UND LIDAR-SENSOR**
METHOD FOR ASCERTAINING OPTICAL CROSSTALK OF A LIDAR SENSOR, AND LIDAR SENSOR
PROCÉDÉ DE DÉTERMINATION DE DIAPHONIE OPTIQUE D'UN CAPTEUR LIDAR, ET CAPTEUR LIDAR

(30) Priorität: 05.08.2020 DE 102020209849
(43) Veröffentlichungstag der Anmeldung: 14.06.2023
(73) Patentinhaber: Robert Bosch GmbH, 70442 Stuttgart (DE)
(72) Erfinder: BOGATSCHER, Siegwart, 71229 Leonberg (DE); GREINER, Alexander, 73262 Reichenbach (DE); FRANZ, Gerald, 71522 Backnang (DE)
(86) Internationale Anmeldenummer: PCT/EP2021/070084
(87) Internationale Veröffentlichungsnummer: WO 2022/028864

(56) Entgegenhaltungen:
- CN-A- 111 366 941
- US-A1- 2013 293 684

## Beschreibung

### Stand der Technik

Die vorliegende Erfindung betrifft ein Verfahren zum Ermitteln eines optischen Übersprechens eines Lidar-Sensors, insbesondere eines ortsauflösenden Lidar-Sensors und einen solchen Lidar-Sensor.

Aus dem Stand der Technik sind Lidar-Sensoren unterschiedlicher Ausprägung bekannt, welche insbesondere in teilautomatisierten oder auch hochautomatisierten Fahrzeugen für eine Umfelderfassung zum Einsatz kommen. Je nach verwendeter Technologie kann ein unterschiedlich starkes Übersprechen im Empfangspfad der Lidar-Sensoren auftreten (z. B. durch Streuung eines Empfangslichtes an einem Schutzglas der Lidar-Sensoren), welches sich in Abhängigkeit eines Reflexionsgrades von Objekten im Umfeld mehr oder weniger deutlich auswirken kann.

CN111366941 A offenbart eine TOF- (time of flight) Messvorrichtung, welche Licht in Form eines vordefinierten Punktrasters zur Abtastung eines Umfeldes aussendet, wobei ein Teil des Punktrasters in einem Empfangsmodul der Messvorrichtung verwendet wird, um direkte Reflexionen des ausgesendeten Lichtes zu detektieren und wobei ein anderer Teil des Punktrasters verwendet wird, um ausgesendetes Licht zu detektieren, welches insbesondere über einer Mehrwegeausbreitung indirekt zur Messvorrichtung reflektiert wurde. Auf Basis einer solchen separaten Erfassung jeweiliger Lichtanteile wird eine Entfernung von indirekt reflektierten Lichtanteilen aus den direkt reflektierten Lichtanteilen ermöglicht.

US2013293684 A1 offenbart eine optische Messvorrichtung, welche einen ersten Projektor, eine erste Kamera, einen zweiten Projektor und eine zweite Kamera aufweist, auf deren Basis mittels eines Prozessors eine dreidimensionale Erfassung eines Umfeldes der Messvorrichtung ermöglicht wird.

DE 10 2015 101 902 A1 beschreibt einen Detektor für ein Lidar-System mit einer Reihe nebeneinander angeordneter strahlungsempfindlicher Pixel. Zwischen den Pixeln befinden sich konstruktionsbedingt strahlungsunempfindliche Zwischenbereiche um ein Übersprechen zwischen den Pixeln zu verringern.

EP 2 998 700 B1 beschreibt ein elektrooptisches Distanzmessgerät und ein Distanzmessverfahren. Gemäß einer Ausführungsform sind ein Sendelichtstrahl und ein Empfangslichtstrahl des elektrooptischen Distanzmessgerätes biaxial zueinander angeordnet. Dadurch, dass jedem Empfangssegment jeweils ein separater Signalverarbeitungspfad zuordenbar ist, kann ein elektronisches Übersprechen von Signalen von unterschiedlichen Empfangssegmenten zumindest vermindert werden.

### Offenbarung der Erfindung

Gemäß einem ersten Aspekt der vorliegenden Erfindung wird ein Verfahren zum Ermitteln eines optischen Übersprechens eines Lidar-Sensors, insbesondere eines ortsauflösenden Lidar-Sensors vorgeschlagen. Der Lidar-Sensor ist beispielsweise als Punktscanner, Flash-Lidar-Sensor und vorzugsweise als Linienscanner ausgebildet. Bevorzugt ist der Lidar-Sensor darüber hinaus ein Lidar-Sensor eines Fortbewegungsmittels, welcher für eine Abtastung eines Umfeldes des Fortbewegungsmittels eingesetzt wird. In einem ersten Schritt des erfindungsgemäßen Verfahrens wird ein Laserlicht des Lidar-Sensors in ein Umfeld des Lidar-Sensors ausgesendet. In einem zweiten Schritt des erfindungsgemäßen Verfahrens wird ein Signal eines Lichtdetektors des Lidar-Sensors repräsentierend im Umfeld des Lidar-Sensors reflektierte bzw. gestreute Anteile des ausgesendeten Laserlichts empfangen. Der Lichtdetektor ist bevorzugt als Flächendetektor ausgebildet ohne auf eine solche Ausbildung beschränkt zu sein. Der Lichtdetektor weist zudem einen ersten Empfangsbereich auf, dessen Ausdehnung und Position auf dem Lichtdetektor einer Ausdehnung und Position des auf den Lichtdetektor abgebildeten Laserlichtes entspricht, wenn eine Streuung des Laserlichtes gleich oder kleiner als ein vordefinierter Schwellenwert ist. Ferner weist der Lichtdetektor einen vom ersten Empfangsbereich abweichenden zweiten Empfangsbereich auf, welcher unmittelbar an den ersten Empfangsbereich angrenzt und welcher eingerichtet ist, Anteile des auf den Lichtdetektor abgebildeten Laserlichtes zu erfassen, wenn die Streuung des Laserlichtes größer als der vordefinierte Schwellenwert ist. Eine solche Streuung des Laserlichtes kann beispielsweise durch ein Schutzglas des Lidar-Sensors und/oder durch weitere optische Elemente (z. B. Linsen) im Sende- und/oder Empfangspfad verursacht werden. Weitere Ursachen für eine solche Streuung sind beispielsweise Regentropfen und/oder Verschmutzungen auf einem Schutzglas des Lidar-Sensors. Ein jeweiliges Ausmaß der Streuung des Laserlichtes im Bereich des Lichtdetektors hängt darüber hinaus von einem Reflexionsgrad von Objekten im Umfeld des Lidar-Sensors ab. Insbesondere stark reflektierende Objekte wie Retroreflektoren (z. B. von Verkehrsschildern, Verkehrsleiteinrichtungen usw.) können somit zu einem hohen Streuungsgrad des Laserlichtes auf dem Lichtdetektor führen. Es sei darauf hingewiesen, dass dem erfindungsgemäßen Verfahren die Annahme zugrunde liegt, dass das am Lichtdetektor empfangene gestreute Laserlicht im Wesentlichen einem isotropen Streulicht entspricht, also einem Streulicht, welches in alle Richtungen gleichmäßig gestreut wird. In einem dritten Schritt des erfindungsgemäßen Verfahrens wird ein Ausmaß des optischen Übersprechens des Lidar Sensors auf Basis der im zweiten Empfangsbereich empfangenen Anteile des Laserlichtes ermitteln. Wenigstens die Schritte des Empfangens des Signals und des Ermittelns der Information über das Ausmaß des optischen Übersprechens erfolgen bevorzugt mittels einer erfindungsgemäßen Auswerteeinheit. Gemäß vorstehend beschriebenem Verfahren lässt folglich eine besonders einfache und kostengünstige Möglichkeit zum Ermitteln eines optischen Übersprechens des Lidar-Sensors realisieren.

Die Unteransprüche zeigen bevorzugte Weiterbildungen der Erfindung.

Vorzugsweise wird die Information über das Ausmaß des optischen Übersprechens bei einer Umfelderkennung auf Basis des Signals des Lidar-Sensors und insbesondere auf Basis der Signalanteile, die den ersten Empfangsbereich repräsentieren, berücksichtigt. Mit anderen Worten ist es auf Basis des erfindungsgemäßen Verfahrens möglich, eine Zuverlässigkeit der Umfelderkennung zu bewerten, da bei einem hohen Ausmaß an Streuung davon auszugehen ist, dass es potentiell zu Fehldetektionen von Objekten im Umfeld des Lidar-Sensors kommen kann.

In einer vorteilhaften Ausgestaltung des vorliegenden Verfahrens werden die Anteile des Signals, welche den zweiten Empfangsbereich repräsentieren, zur wenigstens teilweisen Kompensation des Übersprechens im ersten Empfangsbereich verwendet. Dies bietet den Vorteil, dass eine Zuverlässigkeit eines Ergebnisses einer nachgelagerten Verarbeitung des Signals (z. B. in vorstehend beschriebener Umfelderkennung) verbessert werden kann, da durch die Streuung in das Nutzsignal eingetragene Störungen zumindest teilweise eliminiert werden können. Während das Ermitteln der Information über ein Ausmaß des optischen Übersprechens des Lidar-Sensors grundsätzlich im Zusammenhang mit einem beliebigen Lidar-System (Punktscanner, Linienscanner, Flash-Lidar) der oben genannten Lidar-Sensoren durchführbar ist, ist eine Kompensation des Übersprechens i. d. R. überwiegend im Zusammenhang mit Linienscannern vorteilhaft anwendbar. Es soll aber explizit nicht ausgeschlossen werden, dass eine solche Kompensation auch im Zusammenhang mit anderen Lidar-Systemen auf Basis des erfindungsgemäßen Verfahrens durchgeführt wird.

Besonders vorteilhaft ist der Lidar-Sensor als ortsauflösender Linienscanner ausgebildet. Mit anderen Worten ist der Lidar-Scanner eingerichtet, das Laserlicht linienförmig in ein Umfeld des Lidar-Sensors abzustrahlen und im Umfeld erzeugte Echos einer solchen Abtastlinie entlang einer Erstreckungsrichtung der Abtastlinie im Empfangspfad des Lidar-Sensors örtlich aufzulösen. Der erste Empfangsbereich umfasst im Zusammenhang mit einem solchen Linienscanner mindestens eine Pixelreihe, welche in Richtung eines Abbildes der Abtastlinie des Lidar-Sensors auf dem Lichtdetektor ausgerichtet ist. Zur wenigstens teilweisen Kompensation des Übersprechens im ersten Empfangsbereich wird für jedes zu betrachtende Pixel der mindestens einen Pixelreihe des ersten Empfangsbereichs eine an das jeweilige zu betrachtende Pixel angrenzende Anzahl von Pixeln des zweiten Empfangsbereichs ermittelt, die auf einer gedachten Linie angeordnet ist, welche orthogonal zur Pixelreihe des ersten Empfangsbereich verläuft und welche das zu betrachtende Pixel schneidet. Anschließend werden jeweilige Helligkeitswerte der jeweiligen ermittelten Pixel des zweiten Empfangsbereichs derart von jeweiligen Helligkeitswerten der Pixelreihe des ersten Empfangsbereichs subtrahiert, dass jeweilige Helligkeiten derjenigen Pixel voneinander subtrahiert werden, welche jeweils denselben Abstand zum betrachtenden Pixel aufweisen. Vorstehend beschriebene Kompensation erfolgt bevorzugt derart, dass sukzessive für alle Pixel oder eine geeignete Teilmenge von Pixeln der Pixelreihe des ersten Empfangsbereichs (also die jeweils zu betrachtenden Pixel), vorstehende Verarbeitungsschritte durchlaufen werden, wobei jeweilige Ergebnisse vorangegangener Kompensationsschritte als Berechnungsgrundlage für jeweils nachfolgende Kompensationsschritte dienen. Vorzugsweise werden nach Abschluss aller Kompensationsdurchläufe diejenigen Anteile des Signals des Lichtdetektors im Signal, welche den ersten Empfangsbereich repräsentieren, durch die jeweils kompensierten Helligkeitswerte ersetzt. Alternativ oder zusätzlich ist es denkbar, auf Basis der kompensierten Helligkeitswerte ein neues Signal zu erzeugen, welches anschließend einer nachgelagerten Verarbeitung zugeführt wird. In einer besonders einfachen und dadurch kostengünstigen Ausgestaltung eines in diesem Zusammenhang anwendbaren Lichtdetektors, verfügt der Lichtdetektor beispielsweise über eine einzelne Pixelreihe im ersten Empfangsbereich und über eine parallel zu dieser Pixelreihe angeordnete weitere Pixelreihe, welche den zweiten Empfangsbereich repräsentiert. Im Falle einer den vordefinierten Schwellenwert überschreitenden Streuung in der Pixelreihe des zweiten Empfangsbereichs, lassen sich auf diese Weise zumindest die unmittelbar benachbarten Pixel (z. B. oberhalb und/oder unterhalb) des jeweils zu betrachtenden Pixels im ersten Bereich mit dem im zweiten Bereich vorliegenden Helligkeitswert kompensieren. Durch eine Verwendung einer Mehrzahl weiterer parallel liegender Pixelreihen im zweiten Bereich, lassen sich entsprechend zusätzliche, weiter entfernt vom jeweils zu betrachtenden Pixel liegende Pixel im ersten Empfangsbereich mittels der zusätzlichen erfassten Helligkeitswerte im zweiten Empfangsbereich kompensieren.

Vorteilhaft werden für die jeweilige Kompensation im ersten Empfangsbereich zu verwendende Helligkeitswerte des zweiten Empfangsbereichs zumindest teilweise mittels einer vordefinierten Streuungscharakteristik des Lidar-Sensors extrapoliert. Dies lässt sich insbesondere dann vorteilhaft einsetzen, wenn der zweite Empfangsbereich, wie oben beispielhaft beschrieben, nur über eine Pixelreihe oder eine geringe Anzahl parallel liegender Pixelreihen verfügt. In einem solchen Fall ist es beispielsweise bei einer Verwendung einer einzelnen Pixelreihe im zweiten Empfangsbereich möglich, auf Basis des Helligkeitswertes des im zweiten Bereich zu verwendenden einzelnen Pixels für einen aktuellen Kompensationsdurchlauf, weitere Helligkeitswerte entlang einer virtuellen (da nicht real vorhandenen) Pixelreihe im zweiten Empfangsbereich zu berechnen. Hierfür können beispielsweise eine die Streuungscharakteristik des Lidar-Sensors beschreibende Funktion und/oder eine Lookup-Table verwendet werden, mittels derer durch Einsetzen bzw. Abgleichen des Helligkeitswertes des Pixels des zweiten Bereichs weitere Helligkeitswerte extrapolierbar sind. Darüber hinaus ist die Extrapolation auch auf Basis einer Mehrzahl von Pixeln im zweiten Bereich durchführbar, wenn dieser mehr als ein Pixel in der Breite aufweist. Die Streuungscharakteristik kann beispielweise eine durchschnittliche Streuungscharakteristik für eine Mehrzahl ähnlich oder identisch aufgebauter Lidar-Sensoren oder eine für jeden Lidar-Sensor individuell ermittelte Streuungscharakteristik sein.

Darüber hinaus ist es denkbar, dass der erste Empfangsbereich eine Mehrzahl parallel angeordnete Pixelreihen umfasst, wobei aus der Mehrzahl parallel angeordnete Pixelreihen eine stellvertretende Pixelreihe ermittelt wird, auf welche die Schritte zur Kompensation des Übersprechens angewendet wird. Die stellvertretende Pixelreihe kann beispielsweise basierend auf Durchschnittswerten parallel liegender Pixel oder basierend auf maximalen Helligkeitswerten in den parallel liegenden Pixelreihen festgelegt werden.

In einer vorteilhaften Ausgestaltung wird die Kompensation des Übersprechens nur auf diejenigen Pixel der mindestens einen Pixelreihe angewendet, welche in ihren jeweils korrespondierenden Pixeln im zweiten Empfangsbereich eine vordefinierte Mindeststreuung aufweisen. Die vordefinierte Mindeststreuung kann beispielsweise auf Basis einer Mindesthelligkeit eines mit dem zu betrachtenden Pixel des ersten Empfangsbereichs korrespondierenden Pixel des zweiten Empfangsbereichs und/oder auf Basis einer durchschnittlichen Mindesthelligkeit einer Mehrzahl von Pixeln im korrespondierenden zweiten Empfangsbereich und/oder auf Basis einer Mindestanzahl beleuchteter Pixel im jeweils korrespondierenden zweiten Empfangsbereich ermittelt werden.

Vorzugsweise ist eine Fläche des Lichtdetektors im Wesentlichen quadratisch, sodass im Falle einer maximalen Streuung der auf dem Lichtdetektor abgebildeten Abtastlinie, eine optimale bzw. annähernd vollständige Kompensation der Helligkeitswerte der ersten Pixelreihen ermöglicht wird.

Vorteilhaft wird die Information über das Ausmaß des optischen Übersprechens zum Ermitteln einer Verschmutzung und/oder einer Nässe an einem Schutzglas des Lidar-Sensors verwendet. Alternativ oder zusätzlich wird die Information über das Ausmaß des optischen Übersprechens zum Ermitteln eines hochreflektierenden Objektes (z. B. eines Retroreflektors) im Umfeld des Lidar-Sensors verwendet, dessen Reflexionsgrad einen vordefinierten Reflexionsgrad überschreitet.

Weiter vorteilhaft wird auf Basis einer Verteilung der Streuung im zweiten Empfangsbereich eine Position und/oder Ausdehnung eines hochreflektierenden Objektes im Umfeld des Lidar-Sensors ermittelt.

Gemäß einem zweiten Aspekt der vorliegenden Erfindung wird ein Lidar-Sensor, insbesondere ein ortsauflösender Lidar-Sensor vorgeschlagen. Der Lidar-Sensor umfasst eine Auswerteeinheit, einen Lichtemitter und einen Lichtdetektor. Die Auswerteeinheit ist beispielsweise als ASIC, FPGA, Prozessor, digitaler Signalprozessor, Mikrocontroller, o. ä., ausgestaltet und wenigstens mit dem Lichtdetektor, bevorzugt zusätzlich auch mit dem Lichtemitter informationstechnisch verbunden. Der Lidar-Sensor ist eingerichtet, mittels des Lichtemitters ein Laserlicht in ein Umfeld des Lidar-Sensors auszusenden, während die Auswerteeinheit eingerichtet ist, ein Signal des Lichtdetektors repräsentierend im Umfeld des Lidar-Sensors reflektierte bzw. gestreute Anteile des Laserlichtes zu empfangen. Der Lichtdetektor weist einen ersten Empfangsbereich auf, dessen Ausdehnung und Position auf dem Lichtdetektor einer Ausdehnung und Position des auf dem Lichtdetektor abgebildeten Laserlichtes entspricht, wenn eine Streuung des Laserlichtes gleich oder kleiner als ein vordefinierter Schwellenwert ist. Zusätzlich weist der Lichtdetektor einen vom ersten Empfangsbereich abweichenden zweiten Empfangsbereich auf, welcher unmittelbar an den ersten Empfangsbereich angrenzt und welcher eingerichtet ist, Anteile des auf den Lichtdetektor abgebildeten Laserlichtes zu erfassen, wenn die Streuung des Laserlichtes größer als der vordefinierte Schwellenwert ist. Die Auswerteeinheit ist darüber hinaus eingerichtet, eine Information über ein Ausmaß des optischen Übersprechens des Lidar-Sensors auf Basis der im zweiten Empfangsbereich empfangenen Anteile des Laserlichtes zu ermitteln.

### Kurze Beschreibung der Zeichnungen

Nachfolgend werden Ausführungsbeispiele der Erfindung unter Bezugnahme auf die begleitende Zeichnung im Detail beschrieben. Dabei zeigen:
- Figur 1: eine schematische Übersicht über Komponenten eines erfindungsgemäßen Lidar-Sensors;
- Figur 2: eine Draufsicht auf einen Lichtdetektor eines erfindungsgemäßen Lidar-Sensors in einem ersten Empfangszustand; und
- Figur 3: eine Draufsicht auf einen Lichtdetektor eines erfindungsgemäßen Lidar-Sensors in einem zweiten Empfangszustand.

### Ausführungsformen der Erfindung

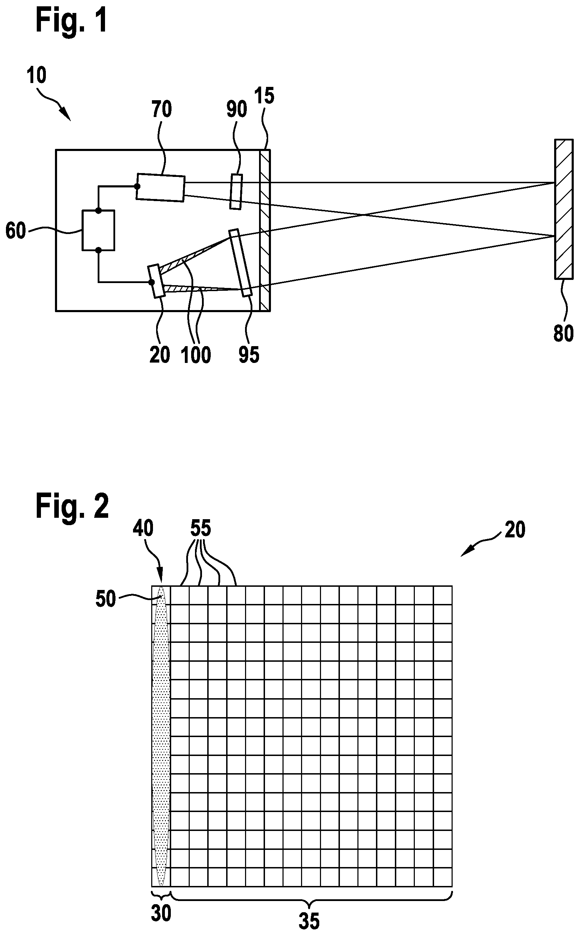

Figur 1 zeigt eine schematische Übersicht über Komponenten eines erfindungsgemäßen Lidar-Sensors 10. Der Lidar-Sensor 10 umfasst einen Lichtemitter 70, welcher in Verbindung mit einer Sendeoptik 90 eingerichtet ist, Laserlicht in Form einer Abtastlinie durch ein Schutzglas 15 des Lidar-Sensors 10 in ein Umfeld des Lidar-Sensors 10 auszusenden. Im Umfeld des Lidar-Sensors 10 an einem Objekt 80 reflektierte bzw. gestreute Anteile des ausgesendeten Laserlichtes treten durch das Schutzfenster 15 des Lidar-Sensors 10 wieder in den Lidar-Sensor 10 ein und werden durch eine Empfangsoptik 95 des Lidar-Sensors 10 auf einen flächig ausgebildeten Lichtdetektor 20 des Lidar-Sensors 10 abgebildet. Durch eine Streuungseigenschaft des Schutzglases 15 umfasst das empfangene Laserlicht insbesondere bei einem hohen Reflexionsgrad des Objektes 80, Streulichtanteile 100, welche zu einem Übersprechen und somit zu einer Reduzierung einer Genauigkeit einer Ortsauflösung des Lidar-Sensors 10 führen können. Eine erfindungsgemäße Auswerteeinheit 60, welche hier als ASIC ausgebildet ist, ist informationstechnisch mit dem Lichtemitter 70 und dem Lichtdetektor 20 verbunden. Auf Basis eines durch die Auswerteeinheit 60 ausgeführten Computerprogramms, welches oben beschriebene erfindungsgemäße Verfahrensschritte implementiert, ist die Auswerteeinheit 60 eingerichtet, ein jeweiliges Ausmaß des Übersprechens zu ermitteln und darüber hinaus eine zumindest teilweise Kompensation des Übersprechens durchzuführen.

Figur 2 zeigt eine Draufsicht auf einen Lichtdetektor 20 eines erfindungsgemäßen Lidar-Sensors in einem ersten Empfangszustand. Der Lichtdetektor 20 ist hier als quadratischer Lichtdetektor 20 ausgebildet, welcher über einen ersten Empfangsbereich 30 und einen zweiten Empfangsbereich 35 verfügt. Der Lichtdetektor 20 ist eingerichtet, eine auf den Lichtdetektor 20 abgebildete Abtastlinie vollständig über die Pixelreihe 40, welche den ersten Empfangsbereich 30 ausbildet, zu empfangen, sofern eine Streuung der abgebildeten Abtastlinie gleich oder kleiner als ein vordefinierter Schwellenwert ist. Der zweite Empfangsbereich 35 setzt sich aus einer Mehrzahl von Pixeln 55 zusammen, welche in dem hier beschriebenen ersten Empfangszustand aufgrund einer sehr geringen vorliegenden Streuung der Abtastlinie nicht bzw. nur unwesentlich beleuchtet werden.

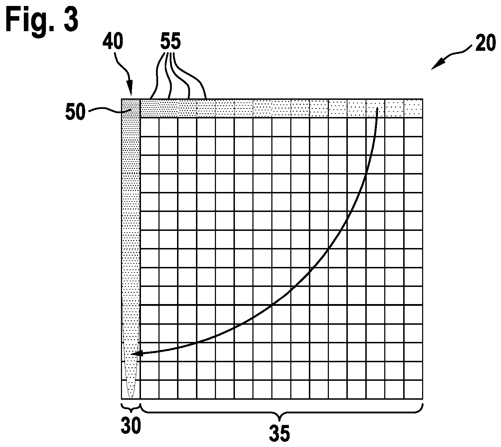

Figur 3 zeigt eine Draufsicht auf einen Lichtdetektor 20 eines erfindungsgemäßen Lidar-Sensors in einem zweiten Empfangszustand. Aufgrund der Ähnlichkeiten zwischen Figur 2 und Figur 3 werden nachfolgend zur Vermeidung von Wiederholungen nur die Unterschiede zwischen den beiden Figuren beschrieben. Figur 3 zeigt einen zweiten Empfangszustand, in welchem ein Teil einer auf den Lichtdetektor 20 abgebildeten Abtastlinie im Bereich des obersten linken Pixels des ersten Empfangsbereichs 30 in einem solchen Ausmaß gestreut wird, dass Störlichtanteile im zweiten Empfangsbereich 35 erfasst werden. Es sei darauf hingewiesen, dass es sich hier um eine vereinfachte Darstellung handelt, welche die eigentlich radiale Streuung um das oberste linke Pixel herum im zweiten Empfangsbereich 35 nicht zeigt. Mittels des oben beschriebenen erfindungsgemäßen Verfahrens wird die horizontal zum oberen linken Pixel vorliegende Helligkeitsinformation im zweiten Empfangsbereich 35 algorithmisch quasi in Richtung der Pixelreihe 40 des ersten Empfangsbereichs 30 gedreht (angedeutet durch den dargestellten Pfeil) und anschließend jeweils pixelweise vom ersten Empfangsbereich 30 subtrahiert, um die Streuung der Abtastlinie zu kompensieren.

## Patentansprüche

1. Verfahren zum Ermitteln eines optischen Übersprechens eines Lidar-Sensors (20) umfassend:
• Aussenden (100) eines Laserlichtes des Lidar-Sensors (10), insbesondere eines ortsauflösenden Lidar-Sensors (10), in ein Umfeld des Lidar-Sensors (10),
• Empfangen (200) eines Signals eines Lichtdetektors (20) des Lidar-Sensors (10) repräsentierend im Umfeld des Lidar-Sensors (10) reflektierte bzw. gestreute Anteile des Laserlichts, wobei
∘ der Lichtdetektor (20) einen ersten Empfangsbereich (30) aufweist, dessen Ausdehnung und Position auf dem Lichtdetektor (20) einer Ausdehnung und Position des auf den Lichtdetektor (20) abgebildeten Laserlichtes entspricht, wenn eine Streuung des Laserlichtes gleich oder kleiner als ein vordefinierter Schwellenwert ist, und
∘ der Lichtdetektor (20) einen vom ersten Empfangsbereich (30) abweichenden zweiten Empfangsbereich (35) aufweist, welcher unmittelbar an den ersten Empfangsbereich (30) angrenzt und welcher eingerichtet ist, Anteile des auf den Lichtdetektor (20) abgebildeten Laserlichtes zu erfassen, wenn die Streuung des Laserlichtes größer als der vordefinierte Schwellenwert ist, und
• Ermitteln (300) einer Information über ein Ausmaß des optischen Übersprechens des Lidar-Sensors (10) auf Basis der im zweiten Empfangsbereich (35) empfangenen Anteile des Laserlichtes.

2. Verfahren nach Anspruch 1 weiter umfassend:
• Berücksichtigen der Information über das Ausmaß des optischen Übersprechens bei einer Umfelderkennung auf Basis des Signals des Lidar-Sensors (10).

3. Verfahren nach einem der vorstehenden Ansprüche weiter umfassend:
• Verwenden der Anteile des Signals, welche den zweiten Empfangsbereich (35) repräsentieren, zur wenigstens teilweisen Kompensation des Übersprechens im ersten Empfangsbereich (30).

4. Verfahren nach Anspruch 3, wobei
• der Lidar-Sensor (10) ein ortsauflösender Linienscanner ist,
• der erste Empfangsbereich (30) mindestens eine Pixelreihe (40) umfasst, welche in Richtung eines Abbildes einer Abtastlinie des Lidar-Sensors (10) auf dem Lichtdetektor (20) ausgerichtet ist, und
• zur wenigstens teilweisen Kompensation des Übersprechens im ersten Empfangsbereich (30)
∘ für jedes zu betrachtende Pixel (50) der mindestens einen Pixelreihe (40) des ersten Empfangsbereichs (30) eine an das jeweilige zu betrachtende Pixel (50) angrenzende Anzahl von Pixeln (55) des zweiten Empfangsbereichs (35) ermittelt wird, die auf einer gedachten Linie angeordnet ist, welche orthogonal zur Pixelreihe (40) des ersten Empfangsbereichs (30) verläuft und welche das zu betrachtende Pixel (50) schneidet, und
∘ jeweilige Helligkeitswerte der jeweiligen ermittelten Pixel (55) des zweiten Empfangsbereichs (35) derart von jeweiligen Helligkeitswerten der Pixelreihe (40) des ersten Empfangsbereichs (30) subtrahiert werden, dass jeweilige Helligkeiten derjenigen Pixel voneinander subtrahiert werden, welche jeweils denselben Abstand zum betrachteten Pixel (50) aufweisen.

5. Verfahren nach Anspruch 4, wobei jeweilige für die Kompensation im ersten Empfangsbereich (30) zu verwendende Helligkeitswerte des zweiten Empfangsbereichs (35) zumindest teilweise mittels einer vordefinierten Streuungscharakteristik des Lidar-Sensors (10) extrapoliert werden.

6. Verfahren nach Anspruch 4 oder 5, wobei
• der erste Empfangsbereich (30) eine Mehrzahl parallel angeordneter Pixelreihen (40) umfasst,
• aus der Mehrzahl parallel angeordneter Pixelreihen (40) eine stellvertretende Pixelreihe (40) ermittelt wird, auf welche die Schritte zur Kompensation des Übersprechens angewendet wird.

7. Verfahren nach einem der Ansprüche 4 bis 6, wobei die Kompensation des Übersprechens nur auf diejenigen Pixel (50) der mindestens einen Pixelreihe (40) angewendet wird, welche in ihren jeweils korrespondierenden Pixeln (55) im zweiten Empfangsbereich (35) eine vordefinierte Mindeststreuung aufweisen.

8. Verfahren nach einem der vorstehenden Ansprüche, wobei eine Fläche des Lichtdetektors (20) im Wesentlichen quadratisch ist.

9. Verfahren nach einem der vorstehenden Ansprüche, wobei die Information über das Ausmaß des optischen Übersprechens zum Ermitteln
• einer Verschmutzung und/oder einer Nässe an einem Schutzglas des Lidar-Sensors (10) verwendet wird, und/oder
• eines hochreflektierenden Objektes im Umfeld des Lidar-Sensors (10) verwendet wird, dessen Reflexionsgrad einen vordefinierten Reflexionsgrad überschreitet.

10. Verfahren nach Anspruch 9, wobei auf Basis einer Verteilung der Streuung im zweiten Empfangsbereich (35) eine Position und/oder Ausdehnung eines hochreflektierenden Objektes ermittelt wird.

11. Lidar-Sensor (10), insbesondere ortsauflösender Lidar-Sensor (10) umfassend:
• eine Auswerteeinheit (60),
• einen Lichtemitter (70), und
• einen Lichtdetektor (20)
wobei die Auswerteeinheit (60) eingerichtet ist,
• in Verbindung mit dem Lichtemitter (70) ein Laserlicht in ein Umfeld des Lidar-Sensors (10) auszusenden,
• ein Signal des Lichtdetektors (20) repräsentierend im Umfeld des Lidar-Sensors reflektierte bzw. gestreute Anteile des Laserlichts zu empfangen, wobei
∘ der Lichtdetektor (20) einen ersten Empfangsbereich (30) aufweist, dessen Ausdehnung und Position auf dem Lichtdetektor (20) einer Ausdehnung und Position des auf den Lichtdetektor (20) abgebildeten Laserlichtes entspricht, wenn eine Streuung des Laserlichtes gleich oder kleiner als ein vordefinierter Schwellenwert ist, und
∘ der Lichtdetektor (20) einen vom ersten Empfangsbereich (30) abweichenden zweiten Empfangsbereich (35) aufweist, welcher unmittelbar an den ersten Empfangsbereich (30) angrenzt und welcher eingerichtet ist, Anteile des auf den Lichtdetektor (20) abgebildeten Laserlichtes zu erfassen, wenn die Streuung des Laserlichtes größer als der vordefinierte Schwellenwert ist, und
• eine Information über ein Ausmaß des optischen Übersprechens des Lidar-Sensors (10) auf Basis der im zweiten Empfangsbereich (35) empfangenen Anteile des Laserlichtes zu ermitteln.

## Claims

1. Method for determining an optical crosstalk of a lidar sensor (20) comprising:
• emitting (100) a laser light of the lidar sensor (10), in particular of a spatially resolving lidar sensor (10), into an environment of the lidar sensor (10),
• receiving (200) a signal of a light detector (20) of the lidar sensor (10) representing portions of the laser light reflected or scattered in the environment of the lidar sensor (10), wherein
∘ the light detector (20) has a first reception region (30), the extent and position of which on the light detector (20) correspond to an extent and position of the laser light imaged onto the light detector (20) if a scattering of the laser light is equal to or less than a predefined threshold value, and
∘ the light detector (20) has a second reception region (35), which differs from the first reception region (30) and which is directly adjacent to the first reception region (30) and which is configured to detect portions of the laser light imaged onto the light detector (20) if the scattering of the laser light is greater than the predefined threshold value, and
• determining (300) information about an extent of the optical crosstalk of the lidar sensor (10) on the basis of the portions of the laser light received in the second reception region (35).

2. Method according to Claim 1, further comprising:
• taking into account the information about the extent of the optical crosstalk in the course of environment recognition on the basis of the signal of the lidar sensor (10).

3. Method according to either of the preceding claims, further comprising:
• using the portions of the signal that represent the second reception region (35) for the at least partial compensation of the crosstalk in the first reception region (30).

4. Method according to Claim 3, wherein
• the lidar sensor (10) is a spatially resolving line scanner,
• the first reception region (30) comprises at least one pixel row (40) oriented in the direction of an image of a scanning line of the lidar sensor (10) on the light detector (20), and
• for the at least partial compensation of the crosstalk in the first reception region (30)
∘ for each pixel (50) to be considered of the at least one pixel row (40) of the first reception region (30), a number of pixels (55) of the second reception region (35) adjacent to the respective pixel (50) to be considered is determined, said number of pixels being arranged on an imaginary line which runs orthogonally with respect to the pixel row (40) of the first reception region (30) and which intersects the pixel (50) to be considered, and
∘ respective brightness values of the respective determined pixels (55) of the second reception region (35) are subtracted from respective brightness values of the pixel row (40) of the first reception region (30) in such a way that respective brightnesses of those pixels which are each at the same distance from the considered pixel (50) are subtracted from one another.

5. Method according to Claim 4, wherein respective brightness values of the second reception region (35) that are to be used for the compensation in the first reception region (30) are at least partially extrapolated by means of a predefined scattering characteristic of the lidar sensor (10).

6. Method according to Claim 4 or 5, wherein
• the first reception region (30) comprises a plurality of pixel rows (40) arranged parallel,
• from the plurality of pixel rows (40) arranged parallel, a representative pixel row (40) is determined, to which the steps for the compensation of the crosstalk are applied.

7. Method according to any of Claims 4 to 6, wherein the compensation of the crosstalk is applied only to those pixels (50) of the at least one pixel row (40) which have a predefined minimum scattering in their respectively corresponding pixels (55) in the second reception region (35).

8. Method according to any of the preceding claims, wherein a surface of the light detector (20) is substantially square.

9. Method according to any of the preceding claims, wherein the information about the extent of the optical crosstalk is used for determining
• contamination and/or wetness on a protective glass of the lidar sensor (10), and/or
• a highly reflective object in the environment of the lidar sensor (10), the reflectance of which exceeds a predefined reflectance.

10. Method according to Claim 9, wherein a position and/or an extent of a highly reflective object are/is determined on the basis of a distribution of the scattering in the second reception region (35).

11. Lidar sensor (10), in particular spatially resolving lidar sensor (10), comprising:
• an evaluation unit (60),
• a light emitter (70), and
• a light detector (20),
wherein the evaluation unit (60) is configured
• in conjunction with the light emitter (70) to emit a laser light into an environment of the lidar sensor (10),
• to receive a signal of the light detector (20) representing portions of the laser light reflected or scattered in the environment of the lidar sensor, wherein
∘ the light detector (20) has a first reception region (30), the extent and position of which on the light detector (20) correspond to an extent and position of the laser light imaged onto the light detector (20) if a scattering of the laser light is equal to or less than a predefined threshold value, and
∘the light detector (20) has a second reception region (35), which differs from the first reception region (30) and which is directly adjacent to the first reception region (30) and which is configured to detect portions of the laser light imaged onto the light detector (20) if the scattering of the laser light is greater than the predefined threshold value, and
• to determine information about an extent of the optical crosstalk of the lidar sensor (10) on the basis of the portions of the laser light received in the second reception region (35).

## Revendications

1. Procédé de détermination d'une diaphonie optique d'un capteur lidar (20), comprenant :
• l'émission (100) d'une lumière laser à partir du capteur lidar (10), en particulier d'un capteur lidar à résolution spatiale (10), dans un environnement du capteur lidar (10),
• la réception (200) d'un signal en provenance d'un détecteur de lumière (20) du capteur lidar (10) représentant des composantes réfléchies ou diffusées de la lumière laser dans l'environnement du capteur lidar (10),
∘ le détecteur de lumière (20) présentant une première zone de réception (30) dont l'étendue et la position sur le détecteur de lumière (20) correspondent à une étendue et à une position de la lumière laser dont l'image est formée sur le détecteur de lumière (20) lorsqu'une diffusion de la lumière laser est égale ou inférieure à une valeur seuil prédéfinie, et
∘ le détecteur de lumière (20) présentant une deuxième zone de réception (35), différente de la première zone de réception (30), directement adjacente à la première zone de réception (30) et qui est conçue pour détecter des composantes de la lumière laser dont l'image est formée sur le détecteur de lumière (20) lorsque la diffusion de la lumière laser est supérieure à la valeur seuil prédéfinie, et
• la détermination (300) d'informations concernant le niveau de la diaphonie optique du capteur lidar (10) sur la base des composantes de la lumière laser reçues dans la deuxième zone de réception (35).

2. Procédé selon la revendication 1, comprenant en outre :
• la prise en compte des informations concernant le niveau de la diaphonie optique lors d'une détection de l'environnement sur la base du signal provenant du capteur lidar (10).

3. Procédé selon l'une des revendications précédentes, comprenant en outre :
• l'utilisation des composantes du signal qui représentent la deuxième zone de réception (35) pour compenser au moins partiellement la diaphonie dans la première zone de réception (30).

4. Procédé selon la revendication 3, dans lequel
• le capteur lidar (10) est un dispositif de balayage linéaire à résolution spatiale,
• la première zone de réception (30) comprend au moins une rangée de pixels (40) qui est alignée dans la direction d'une image d'une ligne de balayage du capteur lidar (10) formée sur le détecteur de lumière (20), et
• pour compenser au moins partiellement la diaphonie dans la première zone de réception (30),
∘ pour chaque pixel à observer (50) sur ladite au moins une rangée de pixels (40) de la première zone de réception (30), on détermine un nombre de pixels (55) de la deuxième zone de réception (35) adjacents au pixel à observer (50), qui sont disposés sur une ligne imaginaire qui s'étend perpendiculairement à la rangée de pixels (40) de la première zone de réception (30) et qui passe par le pixel à observer (50), et
∘ les valeurs de luminosité respectives des pixels (55) de la deuxième zone de réception (35) sont soustraites aux valeurs de luminosité respectives de la rangée de pixels (40) de la première zone de réception (30) de manière à soustraire les luminosités respectives des pixels respectivement situés à la même distance par rapport au pixel à observer (50).

5. Procédé selon la revendication 4, dans lequel les valeurs de luminosité de la deuxième zone de réception (35) qui doivent être utilisées pour la compensation dans la première zone de réception (30) sont extrapolées au moins partiellement au moyen d'une caractéristique de diffusion prédéfinie du capteur lidar (10).

6. Procédé selon la revendication 4 ou 5, dans lequel
• la première zone de réception (30) comprend une pluralité de rangées de pixels (40) disposées en parallèle,
• la pluralité des rangées de pixels (40) disposées en parallèle détermine une rangée de pixels (40) de substitution à laquelle sont appliquées les étapes de compensation de la diaphonie.

7. Procédé selon l'une des revendications 4 à 6, dans lequel la compensation de la diaphonie n'est appliquée qu'aux pixels (50) d'au moins une rangée de pixels (40) qui présentent une diffusion minimale prédéfinie dans leurs pixels correspondants (55) dans la deuxième zone de réception (35).

8. Procédé selon l'une des revendications précédentes, dans lequel une surface du détecteur de lumière (20) est sensiblement carrée.

9. Procédé selon l'une des revendications précédentes, dans lequel les informations concernant le niveau de la diaphonie optique sont utilisées pour déterminer
• une contamination et/ou une humidité sur un verre de protection du capteur lidar (10), et/ou
• un objet fortement réfléchissant dans l'environnement du capteur lidar (10) dont le coefficient de réflexion est supérieur à un coefficient de réflexion prédéfini.

10. Procédé selon la revendication 9, dans lequel une position et/ou une étendue d'un objet fortement réfléchissant sont déterminées sur la base d'une distribution de la diffusion dans la deuxième zone de réception (35).

11. Capteur lidar (10), en particulier capteur lidar à résolution spatiale (10) comprenant :
• une unité d'évaluation (60),
• un émetteur de lumière (70), et
• un détecteur de lumière (20)
l'unité d'évaluation (60) étant conçue pour
• émettre une lumière laser dans un environnement du capteur lidar (10) en liaison avec l'émetteur de lumière (70),
• recevoir en provenance du détecteur de lumière (20) un signal représentant des composantes réfléchies ou diffusées de la lumière laser dans l'environnement du capteur lidar
∘ le détecteur de lumière (20) présentant une première zone de réception (30) dont l'étendue et la position sur le détecteur de lumière (20) correspondent à une étendue et à une position de la lumière laser dont l'image est formée sur le détecteur de lumière (20) lorsqu'une diffusion de la lumière laser est égale ou inférieure à une valeur seuil prédéfinie, et
∘ le détecteur de lumière (20) présentant une deuxième zone de réception (35), différente de la première zone de réception (30), directement adjacente à la première zone de réception (30) et qui est conçue pour détecter des composantes de la lumière laser dont l'image est formée sur le détecteur de lumière (20) lorsque la diffusion de la lumière laser est supérieure à la valeur seuil prédéfinie, et
• déterminer des informations concernant le niveau de la diaphonie optique du capteur lidar (10) sur la base des composantes de lumière laser reçues dans la deuxième zone de réception (35).
